# EUROPÄISCHE PATENTSCHRIFT

(11) **EP 2 733 093 B1**
(45) Veröffentlichungstag und Bekanntmachung des Hinweises auf die Patenterteilung: **02.08.2017**
(21) Anmeldenummer: 13193238.6
(22) Anmeldetag: 18.11.2013
(51) Int. Cl.: B65G 21/18, B65G 47/51

(54) **Vorrichtung zum Bereitstellen von Formteilen in einer Getränkeabfüllanlage**
Device for the provision of molded parts in a beverage bottling machine
Dispositif permettant de mettre à disposition des pièces moulées dans une installation de remplissage de boissons

(30) Priorität: 19.11.2012 DE 202012104466 U
(43) Veröffentlichungstag der Anmeldung: 21.05.2014
(73) Patentinhaber: Krones AG, 93073 Neutraubling (DE)
(72) Erfinder: Buchhauser, Klaus, 93073 Neutraubling (DE); Klepatz, Sebastian, 93073 Neutraubling (DE); Schönfelder, Markus, 93073 Neutraubling (DE)
(74) Vertreter: Nordmeyer, Philipp Werner

(56) Entgegenhaltungen:
- EP-A1- 2 050 696
- WO-A1-2005/102877
- WO-A1-2011/012611
- DE-A1-102004 007 590
- GB-A- 831 911
- US-A1- 2002 170 850

## Beschreibung

### Technisches Gebiet

Die vorliegende Erfindung betrifft eine Vorrichtung zum Bereitstellen von Formteilen in einer Getränkeabfüllanlage, nach dem Oberbegriff des Anspruchs 1. Die Formteile werden so einer weiteren Bearbeitungsvorrichtung, beispielsweise einem Verschließer, zur weiteren Verarbeitung bereitgestellt.

### Stand der Technik

Aus dem Stand der Technik sind unterschiedliche Fördervorrichtungen zum Fördern insbesondere von Formteilen in Getränkeabfüllanlagen bekannt. So finden im Bereich der Förderung von Kunststoffschraubverschlüssen so genannte Luftförderer Verwendung, bei welchen die jeweiligen Formteile mittels eines entsprechenden Luftstromes angehoben und dann auf die jeweilige Höhe gefördert werden. Hierzu ist zum einen eine genaue Ausbildung der verwendeten Führungsvorrichtungen notwendig, um ein Verklemmen und Verkanten des durch die Führungsvorrichtung geblasenen Formteils zuverlässig zu vermeiden. Zum anderen werden durch das Fördern der Formteile in einem solchen Luftförderer relativ hohe Geschwindigkeiten der Formteile erreicht, so dass ein höherer Verschleiß an den Formteilen auftritt.

Weiterhin bekannt sind so genannte Wasserfallförderer und herkömmliche Bandförderer, welche jedoch bei den in Getränkeabfüllanlagen üblicherweise zu überwindenden Höhenunterschieden relativ langgestreckt sein müssen und entsprechend einen großen Bauraum beanspruchen. Üblicherweise werden in Getränkeabfüllanlagen und insbesondere im Bereich der Zuführung von Kunststoffschraubverschlüssen zu einem entsprechenden Verschließer die Kunststoffschraubverschlüsse im Bodenbereich der Anlage sortiert und ausgerichtet, und dann über einen Höhenförderer dem eigentlichen Verschließer, welcher die Verschließköpfe umfasst und welcher zum Aufbringen der Verschlüsse auf die befüllten Behälter ausgebildet ist, bereitgestellt. Hier muss üblicherweise ein relativ großer Höhenunterschied überwunden werden.

Aus der DE 20 2010 012 822 U1 ist ein wendelförmiger Kettenförderer bekannt, welcher über einen gewendelten Transportweg beziehungsweise eine gewendelte Kettenführung Teile von einem ersten Niveau auf ein zweites Niveau anheben kann. Eine für Getränkeabfüllanlagen geeignete Ausbildung dieses Kettenförderers ist nicht offenbart.

Ein Wendelförderer, welcher einen dynamischen Puffer auf der wendelförmigen Transportbahn bereitstellt, ist beispielsweise aus der DE 10 2004 007 590 A1 bekannt.

An die aus dem Stand der Technik bekannten Höhenförderer schließt sich üblicherweise ein Puffer für die Formteile an, um eine Entkopplung der unterschiedlichen Prozessstufen, also beispielsweise eine Entkopplung des Zuführens der Formteile, des Sortierens der Formteile sowie des eigentlichen Einsatzes der Formteile, beispielsweise in einem Verschließer, zu erreichen. Auch hier wird durch die Verwendung eines separaten Puffers Bauraum in einer Getränkeabfüllanlage verwendet. Besonders bei der Verwendung von Luftförderern ist durch die notwendige Ausbildung der jeweiligen Führungsvorrichtungen, die so exakt sein müssen, dass ein Umfallen, Verkanten oder Umstürzen der jeweils geförderten Formteile über die Förderstrecke nicht stattfindet, die Zugänglichkeit zu einzelnen Anlagenbereichen stark erschwert. Entsprechend gestaltet sich die Wartung beziehungsweise Reinigung eines solchen Luftförderers schwierig.

Die DE 10 2004 007 590 A1 beschreibt eine Vorrichtung nach dem Oberbegriff des Anspruchs 1. Die WO 2005/102877 A1 beschreibt ein Verfahren und eine Vorrichtung zur Pufferung von Produkten.

### Darstellung der Erfindung

Ausgehend von dem genannten Stand der Technik ist es eine Aufgabe der vorliegenden Erfindung, eine kompaktere Vorrichtung zum Bereitstellen von Formteilen in einer Getränkeabfüllanlage anzugeben. Weiterhin ist es eine Aufgabe der vorliegenden Erfindung, eine Vorrichtung zum Bereitstellen von Formteilen in eine Getränkeabfüllanlage anzugeben, welche ein verbessertes Wartungsverhalten zeigt.

Die genannte Aufgabe wird durch eine Vorrichtung zum Fördern von Formteilen mit den Merkmalen des Anspruchs 1 gelöst. Vorteilhafte Weiterbildungen ergeben sich aus den Unteransprüchen.

Entsprechend wird eine Vorrichtung zum Bereitstellen von Formteilen in einer Getränkeabfüllanlage angegeben, bevorzugt zum Bereitstellen von Kunststoffschraubverschlüssen für eine nachfolgende Bearbeitungsstation in einer Getränkeabfüllanlage, welche eine endlos umlaufende Förderkette zum Fördern der Formteile umfasst, wobei die Förderkette zwischen einem Zulaufbereich und einem Auslaufbereich eine wendelförmige Förderbahn ausbildet. Erfindungsgemäß ist am Zulaufbereich und/oder am Auslaufbereich ein Puffer zum Puffern der Formteile angeordnet.

Dadurch, dass am Zulaufbereich und/oder am Auslaufbereich ein Puffer zum Puffern der Formteile vorgesehen ist, lässt sich eine besonders kompakte und bauraumsparende Ausbildung der Vorrichtung zum Bereitstellen von Formteilen erreichen. Insbesondere kann die Vorrichtung auf diese Weise zwei Funktionen erfüllen, nämlich zum einen die Höhenförderung, mittels welcher die Formteile von einem ersten Niveau, typischerweise einem niedrigeren Niveau, auf ein zweites Anlagenniveau, typischerweise ein höheres Anlagenniveau, gefördert werden. Eine solche Förderung von einem niedrigen Anlagenniveau auf ein höheres Anlagenniveau ist beispielsweise beim Fördern von Kunststoffschraubverschlüssen notwendig, wenn diese von einem Bodenniveau, auf welchem üblicherweise die Sortierung und Orientierung der Formteile stattfindet, auf ein höher gelegenes Niveau, beispielsweise dem Zuführniveau zu einem Verschließer, gefördert werden sollen.

Zum anderen übernimmt die vorgeschlagene Vorrichtung die Funktion einer Pufferung, wobei durch den am Zulaufbereich und/oder am Auslaufbereich vorgesehenen Puffer eine weitere Pufferwirkung erzeugt wird. Besonders bevorzugt ist der Puffer oberhalb und/oder unterhalb der Förderbahn angeordnet.

Eine besonders zuverlässige und einfach zugängliche Pufferleistung lässt sich erreichen, indem erfindungsgemäß der Puffer eine Pufferfläche zur Pufferung von Formteilen aufweist. Die Pufferfläche ist dabei waagerecht orientiert und scheibenförmig. Um ein Abräumen der Pufferfläche bei einem gewünschten Abbau des Puffers zu unterstützen, ist die Pufferfläche bevorzugt rotierbar und/oder es ist ein Mittel zum Abräumen der Formteile vorgesehen.

In einer besonders bevorzugten Ausführungsform entspricht die äußere Kontur des Puffers senkrecht zur Maschinenachse der äußeren Kontur der jeweiligen Förderwendel beziehungsweise deren Führungen. Mit anderen Worten ist der Puffer, welcher oberhalb oder unterhalb der Förderwendel angeordnet ist, mit dem gleichen Fußabdruck versehen, wie die Vorrichtung, welche die Förderbahn trägt. Auf diese Weise lässt sich eine besonders kompakte Ausbildung erreichen und es kann darüber hinaus über das Zusammenspiel zwischen der Förderleistung der Förderkette und der Puffervorrichtung eine besonders effektive Pufferleistung bei kompaktem Bauraum beziehungsweise kompaktem Baumaß der Vorrichtung erreicht werden.

Um eine zuverlässige Förderung der Formteile zu erreichen, ist die Förderkette bevorzugt beschichtet und/oder als Förderband so ausgebildet, dass ein bestimmter Förderwinkel erreicht werden kann, ohne dass die geförderten Teile rutschen oder umfallen.

Das Fördertrum der Förderkette ist bevorzugt wendelförmig, das Rücklauftrum hingegen bevorzugt geradlinig ausgeführt. Dadurch kann die Förderkette weniger lang ausgebildet sein, als wenn das Rücklauftrum unterhalb des Fördertrums wendelförmig zurückgeführt wird.

Um eine kompakte und integrierte Ausgestaltung zu erreichen, schließt der Puffer vorteilhaft direkt an die Förderbahn an und/oder ist direkt vor der Förderbahn angeordnet.

Es wird ferner eine Vorrichtung - die nicht Teil der Erfindung ist - zum Bereitstellen von Formteilen in einer Getränkeabfüllanlage vorgeschlagen, bevorzugt zum Bereitstellen von Kunststoffschraubverschlüssen für eine nachfolgende Bearbeitungsstation in einer Getränkeabfüllanlage, welche eine endlos umlaufende Förderkette zum Fördern der Formteile umfasst, wobei die Förderkette zwischen einem Zulaufbereich und einem Auslaufbereich eine wendelförmige Förderbahn ausbildet und wobei sich die Förderbahn um einen maschinenteilfreien Raum herum erstreckt. Diese Ausbildung ermöglicht es, dass ein Montageraum beziehungsweise ein Mannloch im Zentrum der Vorrichtung entsteht, durch welches hindurch ein Bediener oder Servicemitarbeiter Zugang zu sämtlichen Bestandteilen der Vorrichtung bekommen kann und entsprechend Wartungsarbeiten vereinfacht durchgeführt werden können. Hierdurch lässt sich die Zugänglichkeit deutlich verbessern.

Bevorzugt ist die Breite der Förderkette so ausgelegt, dass sämtliche Formteile, welche in einem bestimmten Anlagenbereich gefördert werden sollen, auf der Förderkette transportiert werden können. Entsprechend ist eine Umrüstung der Vorrichtung bei einem Wechsel, beispielsweise der Verschlussart, nicht notwendig. Damit ergibt sich eine besonders hohe Flexibilität bezüglich des Einsatzes der Vorrichtung - anders als beispielsweise bei einem Luftförderer, bei welchem eine erneute Justage und Neudimensionierung der einzelnen Förderstrecken notwendig ist, wenn Formteile unterschiedlicher Dimensionen gefördert werden müssen.

Bevorzugt weist die Vorrichtung einen modularen Aufbau auf. Besonders bevorzugt sind dabei die Schienen beziehungsweise die Führungsvorrichtungen, mittels welcher die Förderkette in der Vorrichtung geführt wird, modular so ausgebildet, dass beispielsweise eine Windung der Wendel ein eigenes Modul darstellt. Entsprechend kann eine dem jeweiligen Anlagenlayout entsprechende Anzahl von unterschiedlichen Wendeln, und entsprechend eine notwendige Förderhöhe durch den Zusammenbau von einer entsprechenden Anzahl an Modulen erreicht werden. Weiterhin ist vorgesehen, unterschiedliche Gesamtmodule, bestehend aus einer vorgegebenen Anzahl an Wendeln und einer entsprechenden Antriebsvorrichtung modular so herzustellen, dass eine Kombination von zwei oder mehreren solcher Module die Überwindung eines vorgegebenen Höhenunterschieds bereitstellen kann.

Die Form der Wendel der wendelförmigen Förderbahn kann an die entsprechenden Anlagennotwendigkeiten angepasst werden. Insbesondere kann der von den Wendeln umschlossene Raum einen runden, einen ovalen, einen quadratischen, einen rechteckigen oder einen beliebig polygonförmigen Querschnitt aufweisen. In einer bevorzugten Variante ist der Wendelförderer mit einem runden oder ovalen Querschnitt ausgebildet.

Weiterhin wird unter "wendelförmig" im vorliegenden Zusammenhang eine Form der Förderbahn verstanden, welche schraubenförmig beziehungsweise helixförmig ausgebildet ist, aber, in ihrem Querschnitt, auch beliebig andere Grundflächen beziehungsweise Querschnitte einnehmen kann. Weiterhin ist, entgegen der üblichen Definition von wendelförmig, eine feste Steigung der einzelnen Wendel nicht notwendig, sondern es können, ebenfalls anlagenspezifisch, innerhalb der Vorrichtung unterschiedliche Steigungen der Wendel vorgesehen sein. Vorteilhaft ist jedoch eine gleichbleibende Steigung sowie ein rotationssymmetrischer Querschnitt der Förderbahn, da hierdurch eine für das Material der Förderbahn schonendere Führung ohne häufige Umlenkung ermöglicht wird.

Eine solche wendelförmige Ausbildung der Fördervorrichtung ermöglicht eine flexible Anpassung an die entsprechenden Zuführ- und Abführhöhen für die entsprechenden Formteile.

### Kurze Beschreibung der Figuren

Die erfindungsgemäße Vorrichtung zum Bereitstellen von Formteilen in einer Getränkeabfüllanlage wird durch die Merkmale des Anspruchs 1 definiert. Weitere Ausführungsformen ergeben sich aus den abhängigen Ansprüchen. Dabei zeigen:
- Figur 1: eine Vorrichtung zum Bereitstellen von Formteilen in einer schematischen perspektivischen Gesamtansicht;
- Figur 2: den Einlaufbereich der Vorrichtung zum Bereitstellen von Formteilen aus Figur 1;
- Figur 3: den Auslaufbereich der Vorrichtung zum Bereitstellen von Formteilen gemäß den vorstehenden Figuren;
- Figur 4: die Vorrichtung zum Bereitstellen von Formteilen in Kombination mit einem Puffer;
- Figur 5: eine Detailansicht der Vorrichtung aus Figur 4;
- Figur 6: eine schematische perspektivische Darstellung einer Vorrichtung zum Bereitstellen von Formteilen in einer weiteren Ausführungsform; und
- Figur 7: eine schematische perspektivische Darstellung einer Vorrichtung zum Bereitstellen von Formteilen in noch einer weiteren Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

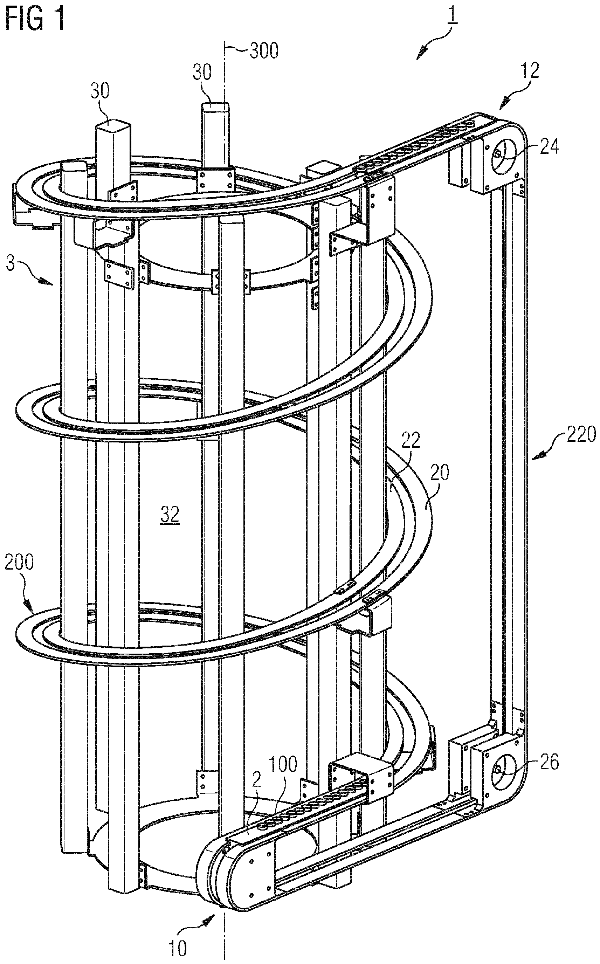

In Figur 1 ist eine Vorrichtung 1 zum Bereitstellen von schematisch angedeuteten Formteilen 100 in einer perspektivischen Darstellung gezeigt. Die Formteile 100 sind hier schematisch in Form von Behälterverschlüssen, beispielsweise Kunststoffschraubverschlüssen zum Verschließen von PET-Flaschen, gezeigt.

Die Vorrichtung zum Fördern weist eine Förderkette 2 auf, welche hier lediglich in einigen Abschnitten schematisch dargestellt ist. Die Förderkette 2 ist, wie sich aus der Figur 1 erkennen lässt, so geführt, dass sie eine wendelförmige Förderbahn ausbildet, auf welcher die Formteile 100 gefördert werden, um der nachfolgenden Bearbeitungsstation zugeführt zu werden.

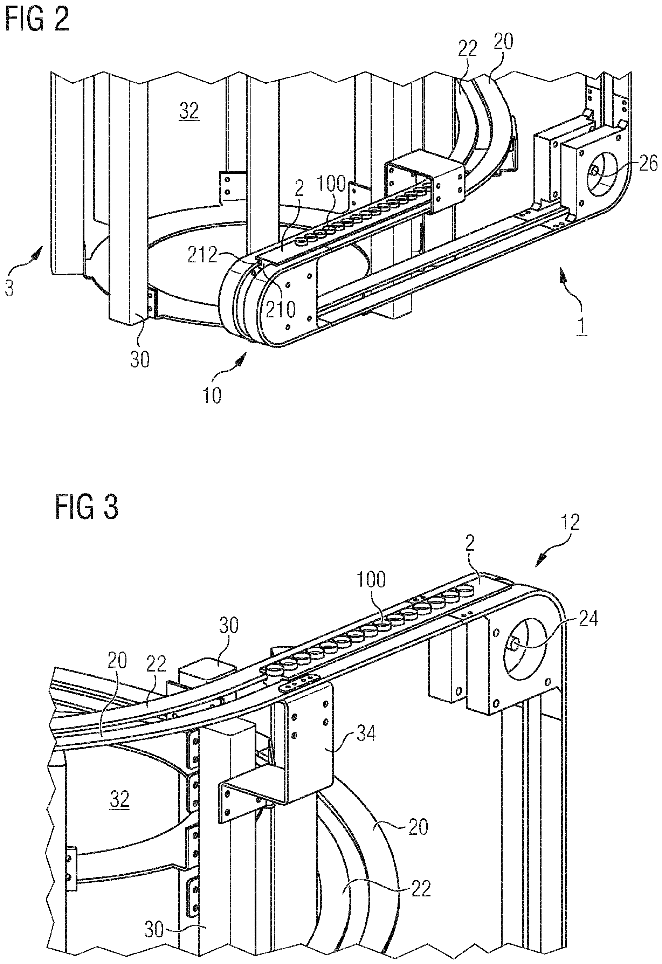

Die Förderkette 2 ist zwischen entsprechenden Führungsschienen 20, 22 geführt. Die Förderkette 2 und die Führungsschienen 20, 22 weisen zueinander komplementäre Führungsbereiche auf, über welche die Führung erreicht wird. Eine beispielhafte Profilierung der Förderkette 2 sowie der Führungsschienen 20, 22 lässt sich in Figur 2 gut erkennen, in welcher schematisch eine Schnittdarstellung 210 der Förderkette 2 gezeigt ist, aus der sich ergibt, dass die Förderkette 2 eine Nut 212 aufweist, über welche die Förderkette 2 in den Führungsschienen 20, 22 geführt wird. Um eine wendelförmige Transportbahn auszubilden, sind die Führungsschienen 20, 22 entsprechend parallel zueinander wendelförmig angeordnet.

Wie sich aus Figur 1 ergibt, findet die Förderung der Formteile 100 von einem Zulaufbereich 10 zu einem Auslaufbereich 12 hin statt, wobei der Zulaufbereich 10 auf einem ersten Anlagenniveau liegt, und der Auslaufbereich 12 auf einem zweiten Anlagenniveau.

In dem in Figur 1 gezeigten Ausführungsbeispiel ist das Fördertrum 200 der Förderkette 2 in einer schraubenförmigen Bahn geführt, so dass entsprechend die Formteile 100 von dem Zulaufbereich 10 zu dem Auslaufbereich 12 gefördert werden. Das Rücklauftrum 220 wird auf geradem Weg zurückgeführt, um entsprechend Förderlänge zu sparen und die unvermeidliche Reibung zu reduzieren.

Die Förderkette 2 wird über einen elektrischen Antrieb angetrieben, welcher schematisch an den Rollen 24 beziehungsweise 26 ansetzen kann. Über einen entsprechenden elektrischen Antrieb, welcher über ein Getriebe am optimalen Arbeitspunkt betrieben werden kann, wird gegenüber einem herkömmlichen Luftförderer ein besonders energieeffizienter Transport erreicht, da auf die Verwendung von energieintensiven Gebläsen verzichtet werden kann. Weiterhin lässt sich der Elektromotor optimal auf die vorgegebene Transportgeschwindigkeit der Förderkette 2 anpassen und die Transportgeschwindigkeiten lassen sich sehr fein justieren.

Die Förderkette 2 kann in herkömmlicher Weise als endlose Kette mit unterschiedlichen Kettengliedern ausgebildet sein. Die Förderkette 2 kann aber auch als endloses, beispielsweise aus einem Kunststoffmaterial hergestelltes, Förderband ausgebildet sein. Ein solches Förderband kann entweder mit einer Beschichtung versehen sein, um ein Rutschen beziehungsweise Abgleiten und Umfallen der zu fördernden Formteile zu verhindern, oder aber auch ohne eine solche Beschichtung ausgebildet sein. Als Beschichtung eignet sich insbesondere eine gummiförmige Beschichtung, beispielsweise aus Silikon oder Kautschuk, welche für ein entsprechend rutschfestes Fördern der Formteile sorgt.

Die Steigung der jeweiligen Wendel der Förderbahn ist so ausgebildet, dass die zu fördernden Formteile sicher auf der Förderkette 2 aufliegen bleiben und entsprechend ein sicheres Fördern ermöglicht wird.

In Figur 1 ist eine Ausbildung der Förderbahn derart gezeigt, dass die Wendel schraubenförmig mit einer gleichmäßigen Steigung sowie einem festen Radius geführt werden. Es handelt sich dabei entsprechend um eine Schraubenform nach der mathematischen Definition. In der Literatur, insbesondere in der Patentliteratur, wird eine solche Form häufig (mathematisch falsch) auch als Spirale bezeichnet, und der entsprechende Förderer als Spiralförderer bezeichnet.

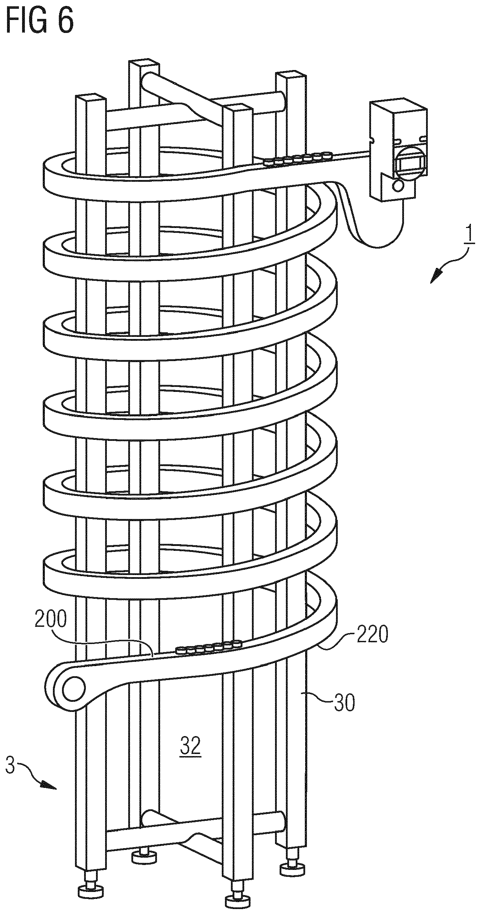

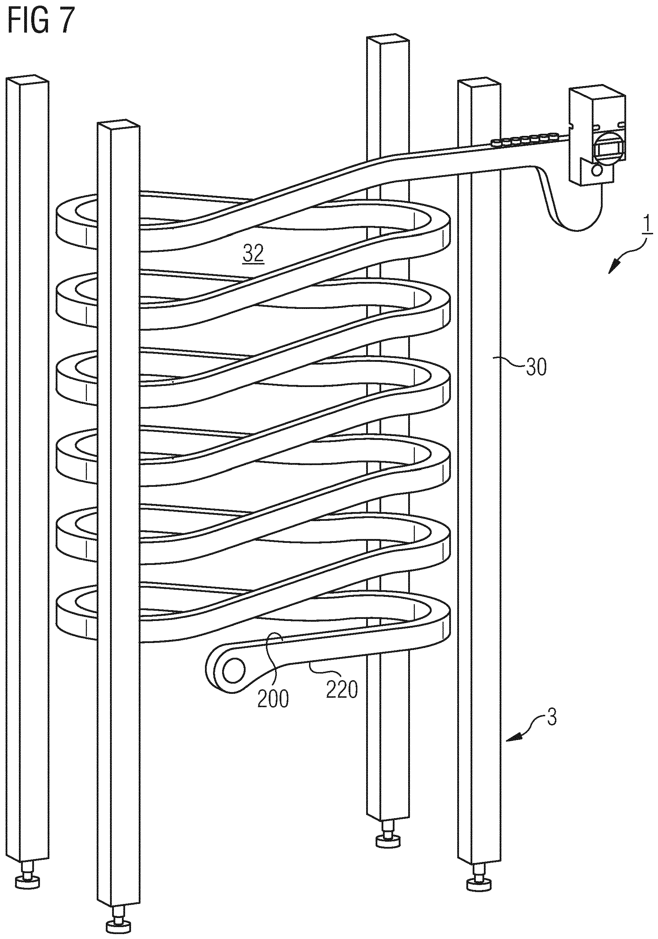

In einer nicht gezeigten Ausführungsform kann jedoch sowohl die Steigung als auch die Form der jeweiligen Wendel variieren. Beispielsweise kann die Wendel einen ovalen, rechteckigen, quadratischen, oder in irgendeiner anderen polygonalen Form ausgebildeten Querschnitt senkrecht zur Maschinenachse 300 aufweisen, um entsprechend an die jeweiligen geometrischen Vorgaben innerhalb einer Getränkeabfüllanlage angepasst zu werden. Dabei sind besonders die möglicherweise vorhandenen Bauräume innerhalb einer Getränkeabfüllanlage zu berücksichtigen. Zwei unterschiedliche Ausprägungen sind beispielsweise in den Figuren 6 und 7 gezeigt, wobei die Figur 6 eine klassische Schraubenform zeigt und die Figur 7 einen ovalen Querschnitt.

Bei der Verwendung unterschiedlicher Steigungen innerhalb der Transportbahn muss natürlich berücksichtigt werden, dass die steilste Steigung so ausgebildet ist, dass immer noch eine sichere Auflage der zu fördernden Formteile 100 auf der Förderkette 2 ermöglicht wird.

In dem in Figur 1 gezeigten Ausführungsbeispiel ist weiterhin ein Maschinengestell 3 mit entsprechenden senkrechten Streben 30 vorgesehen, an denen die Führungsschienen 20, 22 befestigt sind. Das Maschinengestell 3 ist dabei so ausgebildet, dass die Streben 30 direkt mit den Führungsschienen 20, 22 verbunden sind und entsprechend im Innenraum ein im Wesentlichen maschinenteilfreier Raum 32 entsteht, welcher entsprechend nicht mit Maschinenbauteilen oder Maschinenelementen der Vorrichtung 1 belegt ist. Über den maschinenteilfreien Raum 32, welcher im Zentrum der wendelförmigen Förderbahn ausgebildet ist, kann ein Bediener oder Servicemitarbeiter direkten Zugang zu sämtlichen Bestandteilen der Vorrichtung 1 erhalten. Insbesondere kann aus diesem maschinenteilfreien Raum 32 heraus ein direkter Zugriff auf die Förderkette 2 erfolgen, so dass beispielsweise bei unvorhergesehenen Stauungen oder Blockaden ein direkter Zugriff möglich ist, ohne dass der Förderweg aufwendig freigelegt werden müsste.

Der maschinenteilfreie Raum 32 im Zentrum der Förderbahn bietet entsprechend einen Zugang für einen Bediener oder Servicemitarbeiter, beispielsweise von unten aus. Dies ist besonders dann von großem Vorteil, wenn die Vorrichtung 1 in beengten Verhältnissen innerhalb einer Getränkeabfüllanlage eingebaut ist, derart, dass ein direkter Zugang zu den Anlagenkomponenten von außen entweder nicht möglich ist, oder nur dann möglich ist, wenn zuvor andere Anlagenbestandteile entfernt wurden.

In Figur 3 ist noch einmal der Auslaufbereich 12 gezeigt, wobei hier die Anbindung der Führungsschienen 20, 22 zur Führung der Förderkette 2 an das Maschinengestell 3 über Klammern 34 von außen deutlich gezeigt ist. Entsprechend findet eine einfache, selbsttragende Konstruktion statt.

Es ist von Vorteil, die einzelnen Wendel, beispielsweise eine Wendel mit einem Wendelbereich von 360°, oder eine größere Wendel mit einem Wendelbereich von 720°, jeweils als separates Modul auszubilden. Mittels solcher Module lässt sich eine Vorrichtung 1 zum Bereitstellen von Formteilen 100 mit der jeweilig gewünschten Förderhöhe auf einfache Weise und mit einem sehr kompakten Aufbau errichten.

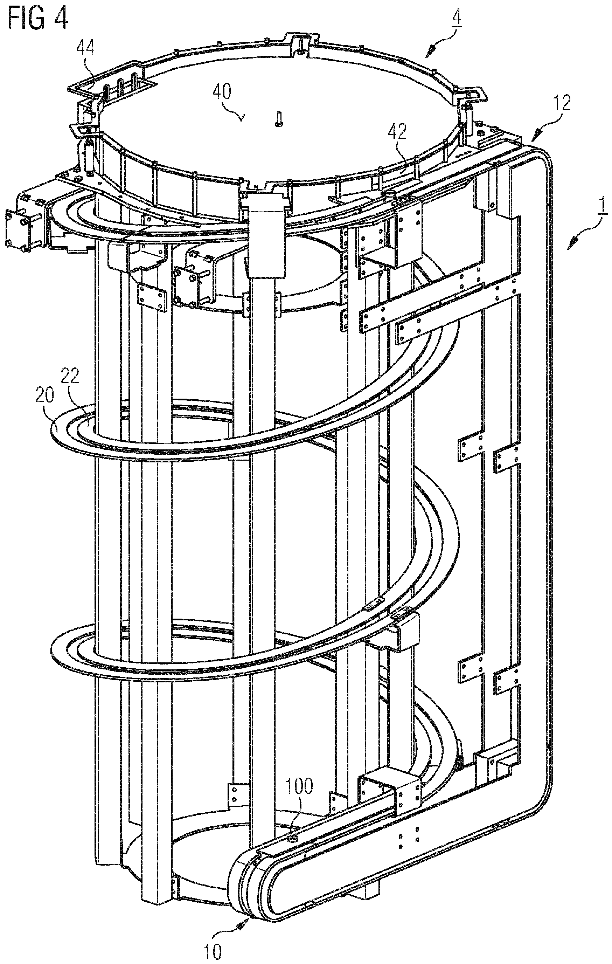

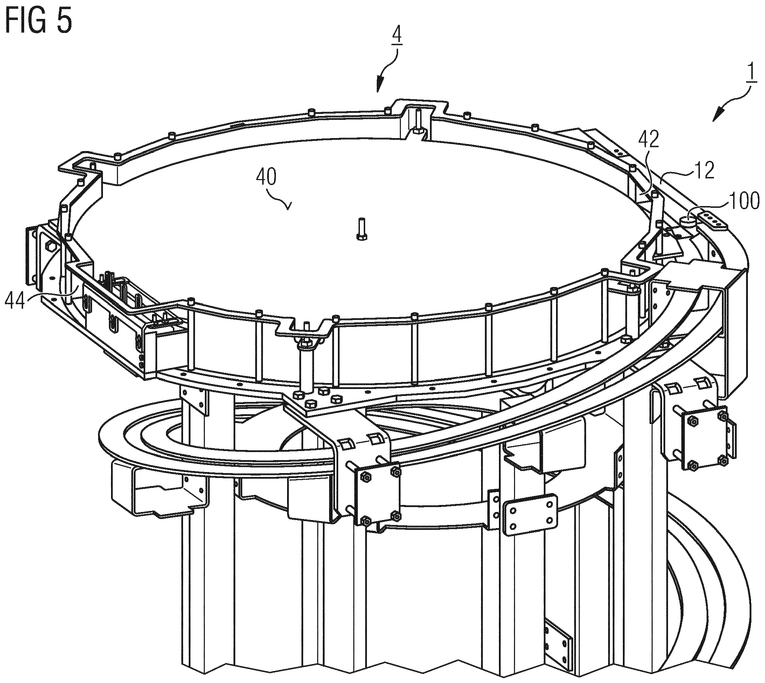

In den Figuren 4 und 5 ist die Vorrichtung 1 mit einem aufgesetzten Puffer 4 gezeigt, wobei der Puffer 4 dazu vorgesehen ist, die Formteile 100 zwischenzuspeichern, bevor sie der nachfolgenden Bearbeitungsstation bereitgestellt werden. Der Puffer 4 weist eine waagerecht angeordnete, in dieser Ausführungsform kreisförmige, Pufferfläche 40 auf, auf welcher die jeweiligen Formteile 100 zwischengepuffert werden können. Dazu werden die Formteile 100 über die Förderkette 2 einem Pufferzulauf 42 zugeführt, und von dort auf die Pufferfläche 40 aufgeschoben. Nach und nach füllt sich entsprechend die Pufferfläche 40 mit Formteilen 100 derart, bis sie über einen entsprechenden Pufferauslauf 44 den nachfolgenden Anlagenbereichen zugeführt wird, beispielsweise einem nachfolgend angeordneten Verschließer in einer Getränkeabfüllanlage.

Der Puffer 4 ist in dem in den Figuren 4 und 5 gezeigten Ausführungsbeispiel oben auf der Fördervorrichtung angebracht und nimmt vom Auslaufbereich 12 der wendelförmigen Förderbahn die entsprechenden Formteile 100 ab.

Der Puffer 4 kann bezüglich der Pufferfläche 40 in beliebigen Ausführungen bereitgestellt werden, wobei hier auch Fördervorrichtungen bereitgestellt werden können, welche für eine Zuführung der Förderteile 100 von dem Pufferzulauf 42 zum Pufferauslauf 44 sorgen. Beispielsweise kann die Pufferfläche 40 rotierbar angeordnet sein, oder aber die Pufferfläche 40 wird von einer entsprechenden, hier nicht gezeigten Räumvorrichtung überstrichen.

Der Puffer 4 ist in dem gezeigten Ausführungsbeispiel so ausgebildet, dass die äußeren Konturen der Pufferfläche 40 innerhalb des von der Förderbahn ausgebildeten Fußabdrucks, beziehungsweise innerhalb dessen Grundfläche liegen. Mit anderen Worten steht der Puffer 4 weder mit seiner Pufferfläche 40 noch mit seinen Außenbereichen über die Außenkonturen der Vorrichtung 1 hinaus.

Entsprechend lässt sich auf diese Weise eine sehr kompakte Kombination aus einer Fördervorrichtung und einem Puffer bereitstellen, welche im Zusammenhang mit Getränkeabfüllanlagen besonders bevorzugt eingesetzt werden kann, da Formteile, beispielsweise Behälterverschlüsse von einer Sortier- und Ausrichtstation, welche auf einem ersten Anlagenniveau angeordnet sind, auf ein zweites Anlagenniveau gefördert werden können, und gleichzeitig eine Pufferwirkung für die Formteile bereitgestellt werden kann, welche beispielsweise kurzfristige Abnahmeprobleme auf der Auslaufseite oder kurzfristige Zuführprobleme auf der Zulaufseite abfedert.

Am Pufferauslauf 44 des Puffers 4 ist beispielsweise eine weitere Transportvorrichtung vorgesehen, beispielsweise eine Transportrinne, über welche die Formteile dann der nachfolgenden Bearbeitungsvorrichtung bereitgestellt werden.

Der gesamte Laufweg der Förderbahn kann gekapselt sein, so dass eine Verschmutzung der Formteile vermieden wird. Alternativ könnte die Fördervorrichtung und/oder der Puffer 4 in einem Gehäuse, welche mit einer Sonderatmosphäre beaufschlagbar ist, untergebracht sein. Das Gehäuse könnte dabei auch mehrere Kammern aufweisen, durch welche die Transportkette hindurch geführt wird. Dabei können die Kammern auch mit unterschiedlichen Sonderatmosphären beaufschlagbar sein. Als Sonderatmosphären werden insbesondere Gase verstanden, welche steril sind und/oder eine sterilisierende Wirkung aufweisen.

Durch die beschriebene Vorrichtung kann eine sehr sanfte Behandlung der Formteile 100 erreicht werden, besonders im Vergleich zu der Behandlung, welche die Formteile in einem Luftförderer erfahren, da die jeweiligen Formteile auf der Förderkette 2 jeweils in einem vorgegebenen Abstand, oder aber dicht an dicht, transportiert werden, ohne jedoch eine Relativbewegung zueinander auszuführen. Weiterhin findet auch keine Relativbewegung zwischen den Formteilen 100 und der Förderkette 2 statt. Damit wird der Verschleiß der Formteile 100 auf dem Transportweg reduziert oder gar vollständig vermieden.

Durch eine entsprechende Auslegung der Förderkette 2 mit einer Breite derart, dass sie alle gängigen oder gewünschten Formteildimensionen aufnimmt, kann weiterhin mit der vorgeschlagenen Vorrichtung eine Förderung sowie Zwischenpufferung erreicht werden, welche unabhängig von den verwendeten Formteildimensionen ist. Aufwändige Justagearbeiten und Umrüstarbeiten zur Anpassung der Vorrichtung an unterschiedliche Dimensionen sind entsprechend nicht notwendig.

In einer bevorzugten weiteren Ausführungsform können auch mehrere der vorgeschlagenen Vorrichtungen hintereinander geschaltet werden, um größere Förderhöhen zu realisieren und/oder ein größeres Puffervolumen bereitzustellen.

Vorteilhaft an der vorgeschlagenen Vorrichtung ist weiterhin, dass das Förderband vollständig entleerbar ist, anders als dies bei einem Luftförderer der Fall ist.

In den Puffer 4 können die Formteile 100 entweder, so wie in den Figuren 4 und 5 gezeigt, über den tangential angeordneten Pufferzulauf 42 zugeführt werden, können aber in einer weiteren Ausbildung auch direkt von oben auf die Pufferfläche 40 aufgebracht werden. Die entsprechende Führung ist abhängig von der Aufstell- beziehungsweise Aufbausituation innerhalb der Getränkeabfüllanlage.

Um einen besonders einfachen Zugang für einen Monteur in den maschinenteilfreien Raum 32 innerhalb der Förderbahn zu erreichen, kann auch eine Steighilfe, beispielsweise in Form einer Leiter, innerhalb des maschinenteilfreien Raums 32 angebracht sein, mittels welcher der entsprechende Servicemitarbeiter einfach einen Zugriff an jeglichen Ort innerhalb des Förderbandes erreichen kann.

Im gezeigten Ausführungsbeispiel weist der Puffer 4 eine geschlossene Pufferfläche 40 auf. Alternativ kann auch, bevorzugt im Zentrum der Pufferfläche 40 ein Mannloch (nicht gezeigt) angeordnet sein. Dadurch kann ein Bediener ebenso die Pufferfläche 40 und angrenzende Baugruppen zur Störungsbeseitigung erreichen.

Soweit anwendbar, können alle einzelnen Merkmale, die in den einzelnen Ausführungsbeispielen dargestellt sind, miteinander kombiniert und/oder ausgetauscht werden, ohne den Schutzumfang der Ansprüche zu verlassen.

### Bezugszeichenliste

- 1: Vorrichtung zum Bereitstellen von Formteilen in einer Getränkeabfüllanlage
- 10: Zulaufbereich
- 12: Auslaufbereich
- 100: Formteil
- 2: Förderkette
- 20: Führungsschiene
- 22: Führungsschiene
- 24: Rolle
- 26: Rolle
- 200: Fördertrum
- 210: Schnitt durch Förderkette
- 212: Nut in Förderkette
- 220: Rücklauftrum
- 3: Maschinengestell
- 30: Strebe
- 32: maschinenteilfreier Raum
- 34: Klammer
- 300: Maschinenachse
- 4: Puffer
- 40: Pufferfläche
- 42: Pufferzulauf
- 44: Pufferauslauf

## Patentansprüche

1. Vorrichtung (1) zum Bereitstellen von Formteilen (100) in einer Getränkeabfüllanlage, bevorzugt zum Bereitstellen von Kunststoffschraubverschlüssen für eine nachfolgende Bearbeitungsstation in einer Getränkeabfüllanlage, umfassend eine endlos umlaufende Förderkette (2) zum Fördern der Formteile (100), wobei die Förderkette (2) zwischen einem Zulaufbereich (10) und einem Auslaufbereich (12) eine wendelförmige Förderbahn ausbildet, wobei
am Zulaufbereich (10) und/oder am Auslaufbereich (12) ein Puffer (4) zum Puffern der Formteile (100) angeordnet ist,
**dadurch gekennzeichnet, dass**
der Puffer (4) eine waagerecht orientierte, scheibenförmige Pufferfläche (40) zur Pufferung von Formteilen (100) aufweist und der Puffer (4) eine Grundfläche aufweist, welche die durch die Förderbahn begrenzte Grundfläche nicht überschreitet, wobei der Puffer (4) innerhalb der von der Förderbahn begrenzten Grundfläche angeordnet ist.

2. Vorrichtung (1) gemäß Anspruch 1, **dadurch gekennzeichnet, dass** der Puffer (4) die gleichen Außenkonturen aufweist, wie die Förderkette.

3. Vorrichtung (1) gemäß einem der vorstehenden Ansprüche, **dadurch gekennzeichnet, dass** der Puffer (4) direkt an die Förderbahn anschließt und/oder direkt vor der Förderbahn angeordnet ist.

4. Vorrichtung (1) gemäß einem der vorstehenden Ansprüche, **dadurch gekennzeichnet, dass** die Pufferfläche (40) rotierbar ist und/oder ein Mittel zum Abräumen der Formteile (100) aufweist.

5. Vorrichtung (1) gemäß einem der vorstehenden Ansprüche, **dadurch gekennzeichnet, dass** die Förderkette (2) beschichtet ist, um den Formteilen (100) einen rutschfreien Halt zu ermöglichen.

6. Vorrichtung (1) gemäß einem der vorstehenden Ansprüche, **dadurch gekennzeichnet, dass** die Förderkette (2) als Förderband ausgebildet ist.

7. Vorrichtung (1) gemäß einem der vorstehenden Ansprüche, **dadurch gekennzeichnet, dass** das Fördertrum (200) wendelförmig ausgebildet ist, und das Rücklauftrum (220) geradlinig ausgebildet ist.

8. Vorrichtung (1) gemäß einem der vorstehenden Ansprüche, **dadurch gekennzeichnet, dass** die Förderkette (2) in Führungsschienen (20, 22) geführt ist, wobei die Führungsschienen (20, 22) bevorzugt modulare Abschnitte der Förderbahn ausbilden.

9. Vorrichtung (1) gemäß einem der vorstehenden Ansprüche, **dadurch gekennzeichnet, dass** die Förderbahn einen runden, ovalen, rechteckigen, quadratischen, oder polygonalen Querschnitt senkrecht zur Maschinenachse (300) aufweist.

## Claims

1. Device (1) for providing moulded parts (100) in a beverage bottling plant, preferably for providing plastic screw caps for a subsequent processing station in a beverage bottling plant, comprising a continuously circulating conveyor chain (2) for conveying the moulded parts (100), wherein the conveyor chain (2) forms a helical conveyor track between an inlet region (10) and an outlet region (12), wherein
a buffer (4) for buffering the moulded parts (100) is arranged at the inlet region (10) and/or at the outlet region (12),
**characterised in that**
the buffer (4) has a horizontally oriented, disc-shaped buffer area (40) for buffering moulded parts (100) and the buffer (4) has a base area which does not exceed the base area delimited by the conveyor track, wherein the buffer (4) is arranged within the base area delimited by the conveyor track.

2. Device (1) according to claim 1, **characterised in that** the buffer (4) has the same outer contours as the conveyor chain.

3. Device (1) according to either of the preceding claims, **characterised in that** the buffer (4) directly adjoins the conveyor track and/or is arranged directly in front of the conveyor track.

4. Device (1) according to any of the preceding claims, **characterised in that** the buffer area (40) is rotatable and/or has a means for clearing away the moulded parts (100).

5. Device (1) according to any of the preceding claims, **characterised in that** the conveyor chain (2) is coated in order to enable the moulded parts (100) to have a non-slip grip.

6. Device (1) according to any of the preceding claims, **characterised in that** the conveyor chain (2) is designed as a conveyor belt.

7. Device (1) according to any of the preceding claims, **characterised in that** the conveying strand (200) is formed helically and the return strand (220) is straight.

8. Device (1) according to any of the preceding claims, **characterised in that** the conveyor chain (2) is guided in guide rails (20, 22), wherein the guide rails (20, 22) preferably form modular sections of the conveyor track.

9. Device (1) according to any of the preceding claims, **characterised in that** the conveyor track has a round, oval, rectangular, square, or polygonal cross-section perpendicular to the machine axis (300).

## Revendications

1. Dispositif (1) pour mettre à disposition des pièces moulées (100) dans une installation de remplissage de boissons, de préférence pour mettre à disposition des bouchons à vis en plastique pour un poste de traitement suivant dans une installation de remplissage de boissons, comprenant un transporteur à chaîne (2) tournant sans fin pour transporter les pièces moulées (100), dans lequel le transporteur à chaîne (2) forme entre une zone d'entrée (10) et une zone de sortie (12) une voie de transport hélicoïdale,
dans lequel un tampon (4) pour stocker temporairement les pièces moulées (100) est agencé au niveau de la zone d'entrée (10) et/ou au niveau de la zone de sortie (12),
**caractérisé en ce que** le tampon (4) comporte une surface de tampon (40) en forme de disque qui est orientée horizontalement et qui est destinée à stocker temporairement des pièces moulées (100) et dans lequel le tampon (4) a une surface de base qui ne dépasse pas la surface de base délimitée par la voie de transport, le tampon (4) étant agencé à l'intérieur de la surface de base délimitée par la voie de transport.

2. Dispositif (1) selon la revendication 1, **caractérisé en ce que** le tampon (4) comporte les mêmes contours extérieurs que le transporteur à chaîne.

3. Dispositif (1) selon l'une des revendications précédentes, **caractérisé en ce que** le tampon (4) se raccorde directement sur la voie de transport et/ou est agencé directement avant la voie de transport.

4. Dispositif (1) selon l'une des revendications précédentes, **caractérisé en ce que** la surface de tampon (40) peut tourner et/ou comporte un moyen destiné à enlever les pièces moulées (100).

5. Dispositif (1) selon l'une des revendications précédentes, **caractérisé en ce que** le transporteur à chaîne (2) est revêtu pour permettre aux pièces moulées (100) de tenir sans glisser.

6. Dispositif (1) selon l'une des revendications précédentes, **caractérisé en ce que** le transporteur à chaîne (2) est conçu comme un transporteur à bande.

7. Dispositif (1) selon l'une des revendications précédentes, **caractérisé en ce que** le brin de transport (200) est conçu en forme d'hélice et le brin de retour (220) est conçu en ligne droite.

8. Dispositif (1) selon l'une des revendications précédentes, **caractérisé en ce que** le transporteur à chaîne (2) est guidé dans des rails de guidage (20, 22), les rails de guidage (20, 22) formant de préférence des tronçons modulaires de la voie de transport.

9. Dispositif (1) selon l'une des revendications précédentes, **caractérisé en ce que** la voie de transport a une section transversale ronde, ovale, rectangulaire, carrée ou polygonale perpendiculairement à l'axe de machine (300).
